# EUROPEAN PATENT SPECIFICATION

(11) **EP 2 165 294 B1**
(45) Date of publication and mention of the grant of the patent: **10.11.2010**
(21) Application number: 08783078.2
(22) Date of filing: 07.07.2008
(51) Int. Cl.: G06K 19/06

(54) **NEW MATERIALS FOR DATA STORAGE**
NEUE MATERIALIEN FÜR DATENSPEICHERUNG
NOUVEAUX MATÉRIAUX POUR LE STOCKAGE DE DONNÉES

(30) Priority: 09.07.2007 GB 0713250; 14.12.2007 GB 0724442; 07.02.2008 GB 0802265; 11.02.2008 GB 0802400; 21.02.2008 GB 0803185
(43) Date of publication of application: 24.03.2010
(73) Proprietor: Katholieke Universiteit Leuven, 3000 Leuven (BE)
(72) Inventor: DE CREMER, Gert, B-3201 Langdorp (BE); DE VOS, Dirk, B-3220 Holsbeek (BE); HOFKENS, Johan, B-2960 Brecht (BE); ROEFFAERS, Maarten, B-3500 Hasselt (BE); SELS, Bert, B-2490 Balen (BE); VOSCH, Tom, B-3001 Heverlee (BE)
(74) Representative: Bird, William Edward
(86) International application number: PCT/BE2008/000052
(87) International publication number: WO 2009/006709

(56) References cited:
- DE-A1- 4 126 461
- US-A1- 2007 111 042

## Description

### Field of the invention

The present invention relates generally to the enhancement of white light and colored light emission by photoactivation using confined metal atomic clusters, preferably silicium, silver, copper and gold, and more particularly to the use of molecular sieves comprising oligo atomic silver clusters as materials with data-storage and data imaging capabilities, for instance for encoding labels such as bio-labels or security labels..

### Background of the invention

The present invention concerns materials with data-storage capabilities comprising emissive material of confined metal oligo atomic clusters in molecular sieves, for instance zeolites.

In recent years, expertise has been gained in the synthesis of zeolites with desired properties by the choice of the structure directing agent (SDA), control of the synthesis conditions, and post-synthesis treatments. (*Ref:* van Bekkum, H., Flanigen, E. M., Jacobs. P. A. Jansen. J. C. (editors) Introduction to Zeolite Science and Practice. 2nd edition. Studies in Surface Science and Catalysis, 2001. 137*:* Corma, A.. Chem. Rev., 1997, 97 2373-2419*:* Davis. M. E., Nature, 2002, 417. 813-821*;* Davis. M.E., et al., Chem. Mater., 1992. 4. 756-768*;* de Moor P-P.E.A. et al., Chem. Eur. J., 1999, 5(7J, 2083-2088*;* Galo, J. de A. A., et al., Chew. Rev., 2002, 102, 4093-4138.) At the same time, the family of ordered mesoporous materials has been greatly expanded by the use of different surfactants and synthesis conditions. (*Ref:* Corma, A., Chem. Rev., 1997. 97. 2373-2419*;* Davis, M. E., Nature. 2002. 417, 813-821*;* Galo, J. de A. A., et al., Chem. Rev., 2002, 102. 4093-4138*;* Ying. J.Y., et al., Angew. Chem. Int. Ed., 1999. 3S, 56-77.) The use of the appropriate template enables the control of the pore size, distribution and connectivity during the zeolite synthesis. For example, use of surfactants such as cetyltrimethylammonium bromide or dodecyltrimethylammonium bromide generally results in formation of mesoporous materials. In a preferred embodiment, the molecular sieves are one or more selected from the group consisting of mordenite. ZSM-5, A-zeolite, L-zeolite, faujasite, ferrierite, chabazite type of zeolites, and mixtures of the foregoing zeolites.

The materials of present invention, for instance zeolites containing oligo silver atom clusters, are cheap and non toxic. Zeolites are currently used in large quantities in washing powder and silver despite its antimicrobial properties, has no known toxic effect on human tissue. Colloidal silver is for instance widely been marketed as a dietary supplement for protective activity against oxidative stress and reactive oxygen species formation.

In contrast to bulk metals which are devoid of a band gap, and hence are good electric conductors, small Au or Ag clusters display interesting emissive properties from discrete energy levels. This phenomenon has been demonstrated e.g., for silver smaller than 100 atoms in rare gas matrices, in aqueous solutions and on silver oxide films. Quantum chemical calculations confirm the molecular character and discrete energy states of these small silver clusters. (*Ref:* I. Johnston, R. L. (2002) Atomic and Molecular Clusters (Taylor & Francis, London and New York*);* Rabin, I., Schulze, W., Ertl, G.. Felix, C., Sieber. C., Harbich. W., & Buttet, J. (2000) Chemical Physics Letters 320. 59-64*.;* Peyser, L. A., Vinson, A. E.. Bartko, A. P., & Dickson, R. M. (2001) Science 291, 103-106*;* Lee, T.-H., Gonzalez, J. I., & Dickson, R. M. (2002) Proc. Natl. Acad, Sci. USA 99, 10272-10275*;* Lee, T. H., Gonzalez, J. I., Zheng, J., & Dickson, R. M. (2005) Accounts of Chemical Research 38. 534-541*;* Bonacic-Koutecky, V., Mitric, R.. Burgel, C., Noack, H., Hartmann, M., & Pittner, J. (2005) European Physical Journal D 34, 113-118*;* Lee. T.-H., Hladik, C. R., & Dickson, R. M. (2003) Nano Letters 3, 1561-1564*;* Rabin, I., Schulze, W., & Ertl, G. (1999) Chemical Physics Letters 312, 394-398*;* Felix. C., Sieber, C., Harbich, W., Buttet, J., Rabin, I., Schulze, W., & Ertl, G. (1999) Chemical Physics Letters 313, 105-109*;* Rabin, I., Schulze, W., & Ertl, G. (1998) Crystal Research and Technology 33, 1075-1084*;* Rabin, I., Schulze, W. & Ertl, G. (1998) Journal of Chemical Physics 108, 5137-5142*;* Konig, L., Rabin, I., Schulze, W. & Ertl, G. (1996) Science 274, 1353-1355*:* Zheng, J. & Dickson, R. M. (2002) Journal of the American Chemical Society 124, 13982-13983*:* Bonacic'-Koutecky, V., Veyret, V., & Mitric', R. (2001) Journal of Chemical Physics 115, 10450-10460*;* Bonacic-Koutecky, V., Pittner, J., Boiron, M., & Fantucci, P. (1999) Journal of Chemical Physics 110, 3876*;* Bonacic'-Koutecky, V., Cespiva, L., Fantucci, P., & Koutecky, J. (1993) Journal of Chemical Physics 98. 7981-7994*_{;}* Yoon, J., Kim, K. S., & Baeck, K. K. (2000) Journal of Chemical Physics 112. 9335-9342*;* Fedrigo, S., Harbich, W., & Buttet, J. (1993) Journal of Chemical Physics 99, 5712-5717*.*)

The major problem in the study and creation of small Au or Ag clusters is aggregation to large nanoparticles and eventually to bulk metal, with loss of emission. Here, it is demonstrated that the use of porous structures with limited pore, cavity and tunnel sizes, overcomes the aggregation problem enabling emissive entities, which are stable in time.

For oxidized silver, such as silver oxide nanoparticles, it has been shown that reduction to metallic silver is possible by the irradiation of UV till visible light (Peyser, L.A., Vinson, A.E., Bartko, A. P.. Dickson, R. M. (2001) Science 291, 103-106). This reduction causes a change in the optical properties of the material, however for such material the final outcome of the reduction reaction is hard to control and finally big non-emissive silver aggregates will have formed.

Silver cluster in molecular sieves exhibit remarkable stability. (*Ref:* Bogdanchikova, N. E., Petranovskii, V. P., Machorro, R.. Sugi, Y., Soto, V. M., & Fuentes, S. (1999) Applied Surface Science 150, 58-64*.*) Bogdanchikova et al. found that the stability of the silver clusters depends on the acid strength, which may be related to the composition, e.g., the SiO₂/Al₂O₃ molar ratio, of the molecular sieves. Silver clusters in mordenites having weak acidic sites are stable for at least 50 months, a sufficiently long period with respect to the application in mind for use in a visible light source. Disappearance of the clusters was linked to oxidation. Reduction of the clusters or an oxygen-free or -poor device obviously could increase the stability even more. In one embodiment in the present invention, Au or Ag clusters are protected from oxidation due to encapsulation in the molecular sieves. Additionally, if required, an external coating of the material crystals or capping of the pore entrances can be used to further protect the occluded metal clusters.

The current state of the art has never suggested or demonstrated the room temperature conversion of invisible light, e.g., with energy in the UV region, to a lower energy, e.g., visible light, by oligo atomic metal clusters embedded in molecular sieves. Also the influence of light-irradiation on the optical properties of such materials have never been studied before.

Some technologies of the art concern the photophysical properties of zeolites loaded with silver. For instance, Chen et al. loaded Y zeolites with Agl, instead of silver clusters, and pumped or charged with 254 nm light, however, without observation or description of visible emission. (Chen, W., Joly, A. G., & Roark, J. (2002) Physical Review B 65, 245404 Artn 245404, US patent 7067072 and US patent 7126136). Calzaferri et al. demonstrated absorption of 254 nm light by silver metal containing zeolites without any notification of emission (Calzaferri, G., Leiggener, C., Glaus, S., Schurch. D., & Kuge, K. (2003) Chemical Society Reviews 32, 29-37.). Kanan et al., showed some emission intensity for silver(I)-exchanged zeolite Y, however only when excited at temperatures below 200 K. (Kanan, M. C., Kanan, S. M., & Patterson, H. H. (2003) Research on Chemical Intermediates 29, 691-704).

DE 4126461 A1 being regarded as the closest prior art, describes a data-storage medium for storing optical data comprising as data-storage material a water in soluble organic colorant confined in a molecular sieve embedded in a support material.

The present invention relates to a data-storage medium as claimed in claim 1, a paint, gelling liquid or elastomer according to claim 24, a printing liquid or ink according to claim 25 and a method according to claim 26.

By the present invention it has been demonstrated that oligo-atomic metal clusters confined in molecular sieves not only exhibit remarkable stability but also can be used for storing optical data. It has for instance been demonstrated that a first time radiation of such molecular sieve unit with UV or visible light will irreversibly enhance the light emission by that unit upon a second UV or visible light excitation or by subjecting it to a current or electrical field. A matrix or carrier containing several such excitable molecular sieve units can be used in a write radiation and read radiation system that allows to store optical information and which can be used for bit data storage or as optical information imager that can be used to visualize stored optical information in an image. Irreversibly enhanced for the present application the meaning that a first time excitation of oligo-atomic metal clusters confined in a molecular sieve by a radiation source (such UV or visible light radiation) will enhance the emission by that molecular sieve unit after a second radiation by UV or visible light in an stable or even irreversible manner such that a observable difference between an unwritten and written zone can be visualized. The written zone will upon activation emits more intensively.

A data-storage material for storing optical data comprising oligo-atomic metal clusters confined in molecular sieves in which the emission upon UV or visible light excitation can be irreversibly enhanced by illumination with UV or visible light

The present invention concerns the field of data storage materials for use as e.g. bio-labels, and related, comprising e.g., white light and colored luminescent materials with emission of visible white or colored light at or above room temperature of which the luminescent intensity can be increased by the irradiation of light. Such devices thus comprise luminescent materials for data storage generated through the action of confined metal oligo atomic clusters, more particularly oligo atomic silver clusters loaded in molecular sieves (e.g., zeolites like the A3, A4 and A5 zeolite).

The present invention relates generally to the enhancement of white and colored light emission from emissive materials by UV-irradiation using confined oligo atomic metal clusters, and more particularly to the use of molecular sieves comprising of these oligo atomic metal clusters as luminescent materials for data-storage application in e.g. bio-labels, or tags for instance for security items.

The present invention solves problems of the related art by providing a material in which patterns such as bar codes can be written optically and in which those patterns are stable over extended periods of time.

In accordance with the purpose of the invention, as embodied and broadly described herein, the invention is broadly drawn to data-storage material comprising an assembly of small clusters of the noble metals of the group consisting of gold, silver, platinum, palladium, silicium and rhodium, preferably Au and/or Ag clusters confined in molecular sieves, preferably zeolites, for converting invisible radiation emitted by a radiation source at room temperature of an higher temperature to visible light and for enhancing the emission intensity upon irradiation with UV or visible light.

In one aspect of the invention, the illumination system of present invention comprises an assembly containing oligo atomic metal clusters, e.g., of Au, Ag and/or alloys thereof, confined in molecular sieves, which are embedded in a matrix. Such matrix may further comprise a particle binder. The assembly can be a powder assembly of small Au and/or Ag clusters confined in molecular sieves.

The clusters in the illumination system of present invention are oligo atomic clusters for instance of 1-100 atoms. The molecular sieves in this invention are selected from the group consisting of zeolites, porous oxides, silicoaluminophosphates, gallophosphates, zincophophates, titanosilicates and aluminosilicates, or mixtures thereof. In a particular embodiment of present invention the molecular sieves of present invention are selected from among large pore zeolites from the group consisting of ZSM-5, MCM-22, ferrierite, faujastites X and Y. The molecular sieves in another embodiment of present invention are materials selected from the group consisting of zeolite 3A, Zeolite 13X, Zeolite 4A, Zeolite 5A and ZKF.

In a particular embodiment of present invention the pores of the molecular sieves containing the small clusters of, e.g., Au and/or Ag are coated with a matrix, or are closed by stopper molecules.

To transfer the UV or visible radiation into more red-shifted light, the light system of present invention does not require the presence of charge compensating anions, such as oxalate, hydroxide, azide, carbonate, bicarbonate, sulfate, sulfite, chlorate, perchlorate, acetate and formate to be in charge association with the noble metals, such as the small metal clusters.

Further scope of applicability of the present invention becomes apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description. It is to be understood that both the foregoing general description and the following detailed description are exemplary and explanatory only and are not restrictive of the invention, as claimed.

An optical data information carrier and optical data display can be made of a system that comprises oligo-atomic metal clusters confined in molecular sieves integrated or comprised in a film. Moreover such optical data information carrier or optical data display system can comprise a laminate structure wherein there is a layer of oligo-atomic metal clusters confined in molecular sieves incorporated in a matrix, preferably a polymer matrix. Such polymer matrix can for a protective structure that incorporates that oligo-atomic metal clusters confined in molecular sieves and protects them form deterioration by external factors and improves stability. The present invention also provides a manufacturing method of an optical data storage or optical data display device device with ensured reliability and processing stability by forming a structure in a simple manner that incorporates the oligo-atomic metal clusters confined in molecular sieves in a polymer matrix. Such polymer layer comprises a polymerization product of an acryl-based vinyl monomer, an aromatic vinyl monomer, acrylonitrile-based vinyl monomer, chloride-based vinyl monomer, vinylstearate or vinylpropionate. Examples of the acryl-based vinyl monomer include one or more mixtures selected from the group consisting of triethylopropane triacrylate, tri(propylene glycol)diacrylate, penthaerithritol triacrylate, trimethylolpropane ethoxylate triacrylate, methyl methacrylate, methacrylate, tri(propylene glycol)glycerolate diacrylate and vinylacrylate. The above described film van be used to directly incorporate the metal clusters confined in molecular sieves in said film or can be used to shield or cover another layer of film which incorporates the metal clusters confined in molecular sieves to protect such second film from environmental factors. Examples of the aromatic vinyl monomer include styrene and divinyl benzene. Examples of the chloride-based vinyl monomer include vinylidene chloride and vinylbenzyl chloride. The oligomer is one or more mixtures selected from the group consisting of urethane acrylate oligomer, acrylate oligomer, ether acrylate oligomer and epoxy acrylate oligomer. The polymerization of such a film can be initated by a polymerization initiator Examples of the polymerization initiator include photo initiators selected from the group consisting of 1-hydroxy-cyclohexyl-phenyl-ketone (Irgacure 907), 2-methyl-1[4-(methylthio)phenyl]-2-morpholinopropane-1-one (Irgacure 184C), 1-hydroxy-2-methyl-1-phenyl-propane-1-one (Darocur 1173), a mixed initiator (Irgacure 500) of Irgacure 184C and benzophenone, a mixed initiator (Irgacure 1000) of Irgacure 184C and Irgacure 1173, 2-hydroxy-1-[4-(2-hydroxyethoxy)phenyl]-2-methyl-1 propanone (Irgacure 2959), methylbenzoylformate (Darocure MBF), α,α-dimethoxy-α-phenylacetophenone (Irgacure 651), 2-benzyl-2-(dimethylamino)-1-[4-(4-morpholinyl)phenyl]-1-butanone (Irgacure 369), a mixed initiator (Irgacure 1300) of Irgacure 369 and Irgacure 651, diphenyl(2,4,6-trimethylbenzoyl)-phosphine oxide (Darocur TPO), a mixed initiator (Darocur 4265) of Darocur TPO and Darocur 1173, phosphine oxide, phenyl bis(2,4,6-trimethyl benzoyl) (Irgacure 819), a mixed initiator (Irgacure 2005) of Irgacure 819 and Darocur 1173, a mixed initiator (Irgacure 2010) of Irgacure 819 and Darocur 1173, and a mixed initiator (Irgacure 2020) of Irgacure 819 and Darocur 1173, bis(.eta.5-2,4-cyclopentadien-1-yl)bis[2,6-difluoro-3-(1H-pyrrol-1-yl)phenyl] titanium(Irgacure 784), and a mixed initiator (HSP 188) containing benzophenene. Also, examples of the polymerization initiator include thermal initiators selected from the group consisting of benzoyl peroxide (BP), acetyl peroxide (AP), diauryl peroxide (DP), di-tert-butyl peroxide (t-BTP). cumyl hydroperoxide (CHP), hydrogen peroxide (HP), potassium peroxide (PP), 2,2'-azobisisobutyronitrile (AIBN), azocompound, and silver alkyls. Further, the polymerization initiator may initiators utilizing an oxidation-reduction reaction selected from the group consisting of persulfate (K2S2O8) and a redox initiator. Coating of the polymers on another layer or on a substrate is performed by spin coating, bar coating, printing, spreading or dipping. Such coating or printing can be done with the polymers that are mixed with the oligo-atomic metal clusters confined in molecular sieves. In the step of forming the encapsulation film, in order to cause a polymerization reaction of the organic solution, light may be irradiated or heat may be applied thereto. When forming film, an fluid comprising the oligo-atomic metal clusters confined in molecular sieves, a vinyl monomer, a polymerization initiator and an oligomer, can be polymerized, thereby enhancing adhesion and hardness of the encapsulation film and denseness of an encapsulation film surface.

A matrix comprising oligo-atomic metal clusters confined in molecular sieves of present invention can be coated by depositing a second film on such optical information storage layer. This can be done by plasma deposition Plasma polymerization is a technique used for depositing polymer-like organic materials, usually in the form of thin films, onto surfaces in contact with or near a plasma discharge. Unlike conventional polymers, plasma polymers do not consist of long chains of monomeric repeat units with sparse "cross-links" connecting the chains. Instead, they are highly branched, three-dimensional interlinked monomer-derived networks which result from fragmentation and dissociation in the plasma in which the film-forming reactant species are generated. Plasma polymerized films are formed from organic monomers and are in general, pinhole-free, dense and amorphous. When compared with conventional polymer films made from the same monomer(s), plasma polymers exhibit better adhesion, and improved chemical and mechanical resistance. Furthermore, the properties of the deposited films can be changed by varying the deposition parameters. Plasma polymerized films are generally formed in an apparatus that typically consists of three parts: (1) a vacuum system, (2) an electrical excitation system for generating a plasma, and (3) a monomer gas delivery system. As monomer molecules flow through the vacuum chamber, the plasma discharge energizes and disassociates the monomer molecules into neutral particles and reactant fragments in the form of electrons, ions and free radicals. As these reactant fragments recombine on a substrate, a highly branched and cross-linked three-dimensional network is formed.

The data storage molecular sieves of present invention can be incorporated and dispersed over a polymer matrix by state of the art technology. ZSM-5 crystals have for instance been incoporated into conventional polymer films and selective separations have been achieved [see Duval, J.-M., Kemperman, A. J. B., Folkers, B., Mulder, M. H. V., and Desgraddchamps, G., J. Appl. Polym. Sci.54 (1994)409-418]. U.S. Pat. No. 4, 973,606 teaches insertion of zeolites into polymers, such as thermoplastic elastomers or duromers, for producing membranes with controllable selectivity for material separation. U.S. Pat. No. 5,069,794 teaches application of zeolite coatings to different substrates to act as thin membranes.

Incorporating molecular sieve zeolites into silica films has also been previously reported by Bein, et al. [see Bein, T., Brown, K., Enzel, P., and Brinker, C. J., Mat. Res. Soc. Symp. Proc., Vol 121 (1988) 761-766]. Such approach utilizes tetraethylorthosilicate (TEOS) as the sole source of silica delivering nitrogen impermeable films.

Another approach of incorporating the data storage molecular sieves of present invention is to tailorg the properties of sol-gel derived materials has emerged which involves organic compound additions to gels for modifying the characteristics of inorganic sol-gel materials. In this approach, the inorganic part of the matrix-forming material provides rigidity and thermal stability, while the organic components in general contribute elasticity and flexibility, although at the expense of some thermal stability. Recent studies by Mackenzie, et al, and others have documented such approaches [see Hu, Y. and Mackenzie, J. D., J. Mater. Sci.27 (1992) 4415-4420; Mackenzie, J. D., Chung, Y. J., and Hu, Y., J. Non-Cryst. Sol.147&148 (1992) 271-279; Hu, Y., Chung, Y. J., and Mackenzie, J. D. , J. Mater. Sci.28 (1993) 6549-6554; Iwamoto, T. and Mackenzie, J. D., J. Mater. Sci.30 (1995) 2566-2570; Nazeri, A., Bescher, E., and Mackenzie, J. D., Ceram. Eng. Sci. Proc.14 (1993) 1-19; Rose, K., Wolter, H., and Glaubitt, W., Mat. Res. Soc. Symp. Proc.271 (1992) 731-736; Schottner, G., Rose, K., and Schubert, U., Intell, Mater. & Sys. (1995) 251-262; Rose, K., Organosilicon Chem. II, Auner, N. and Weis, J., eds. (1996) 649-653]. With these methods, co-polymers are typically formed from alkoxysilanes, usually with TEOS or tetramethylorthosilane (TMOS) as the primary silica source. In these methods, hydrolysis reactions, usually in acid media, precipitate silica moieties, which are then crosslinked by condensation reactions between other silane molecules or silica moieties which have external--OH groups at their surfaces.

Inorganic/organic polysiloxane hybrid polymers are known in the art and described in High Performance Ceramic Films and Coatings (Elsevier Science Publishers B. V., 1991), which is herein incorporated by reference. One family of these hybrid polymers which has particular utility is commercially available from Fraunhofer-Gesellschaft (Munich, Germany) and designated by German trademark ORMOCERS®. Inorganic-organic polysiloxane hybrid polymers are also disclosed in German patent DE 43 03 570, which is herein incorporated by reference. Also hybrid polysiloxane polymer which acts as a matrix or binder for zeolite additives to form a zeolite-polymer composite can be used (US6248682). Virtually any molecular sieve materials such as zeolite material or mixtures of zeolites may be utilized for the composite materials.

Other aspect of present invention concerns the incorporation of oligo-atomic metal clusters confined in molecular sieves into a matrix of polymeric fibers or other synthetic or artificial fibers which can be ordered for instance by weaving, knitting, crocheting, knotting, or pressing fibers together in a flexible material comprised of a network of such fibers. Such flexible material can be further processed into a fabric. Examples of synthetic fibers are the fibers of the group Nylon, Modacrylic, Olefin, Acrylic, Polyester, PLA, Vinyon, Saran Spandex, Vinalon, Aramids (( known as Nomex, Kevlar and Twaron). Modal. PBI (Polybenzimidazole fibre), Sulfar, Lyocell, Dyneema/Spectra, M-5 (PIPD fibre), Orlon, Zylon (PBO fibre), Vectra LCP polymer, Acrylonitrile. This can be used to incormporate the optical data storage or optical data imaging materials of present invention.

### DETAILED DESCRIPTION OF EMBODIMENTS OF THE INVENTION

By the term "data storage" used in this application is meant the possibility to create certain patterns inside or on a material by locally changing the optical properties of this material with the possibility of reading the patterns using an electromagnetic probe beam or other reading means..

"Room temperature" as used in this application means a temperature between 12 - 30° C (Celsius), preferably between 16 and 28°C, more preferably 17 and 25°C and most preferably it is taken to be roughly 20 to 23 degrees.

By the term luminescence or emissive, the following types are included: chemoluminescence, crystalloluminescence, electroluminescence, photoluminescence, phosphorescence, fluorescence, thermoluminescence.

Oligo atomic metal clusters include clusters ranging from 1 to 100 atoms of the following metals (sub nanometer size), Si, Cu, Ag, Au, Ni, Pd, Pt, Rh, Co and Ir or alloys thereof such as Ag/Cu, Au/Ni etc. The clusters can be neutral, positive or negatively charged. The oligo atomic metal clusters can be small oligo atomic silver- (and/or gold) molecules containing 1 to 100 atoms.

The articles "a" and "an" are used herein to refer to one or more than one (i.e., at least one) of the grammatical object of the article. By way of example, "an element" means one element or more than one element.

The terms "comprise" and "comprising" are used in the inclusive, open sense, meaning that additional elements may be included.

The term "including" is used to mean "including but not limited to". "Including" and "including but not limited to" are used interchangeably.

The term "in particular" is used to mean "in particular but not limited to". And the term "particularly" is used to mean "particularly but not limited to"

The term "zeolite" also refers to a group, or any member of a group, of structured aluminosilicate minerals comprising cations such as sodium and calcium or, less commonly, barium, beryllium, lithium, potassium, magnesium and strontium; characterized by the ratio (Al+Si):O = approximately 1:2, an open tetrahedral framework structure capable of ion exchange, and loosely held water molecules, that allow reversible dehydration. The term "zeolite" also includes "zeolite-related materials" or "zeotypes" which are prepared by replacing Si⁴⁺ or Al³⁺ with other elements as in the case of aluminophosphates (e.g., MeAPO, SAPO, ElAPO, MeAPSO, and ElAPSO), gallophosphates, zincophophates, titanosilicates, etc. The zeolite can be a crystalline porous material with a frame work as described in Pure Appl. Chem., Vol. 73, No. 2, pp. 381-394, © 2001 IUPAC or provided in the Zeolite Framework Types database of the IZA structure commission where under the following structure types, as defined by the International Zeolite Association such as ABW type, ACO type, AEI type, AEL type. AEN type. AET type, AFG AFI type, AFN type, AFO type, AFR type, AFS type, AFT type, AFX type, AFY type, AHT type, ANA type, APC type, APD type, AST type, ASV type. ATN type, ATO type, ATS type, ATT type, ATV type, AWO type, AWW type, BCT type, *BEA type, BEC type, BIK type, BOG type, BPH type, BRE type, CAN type, CAS type, CDO type, CFI type, CGF type, CGS type, CHA type, -CHI type, - CLO type, CON type, CZP type, DAC type, DDR type, DFO type, DFT type, DOH type, DON type, EAB type, EDI type, EMT type, EON type, EPI type, ERI type, ESV type, ETR type, EUO type, EZT type, FAR type, FAU type, FER type, FRA type, GIS type, GIU type, GME type, GON type, GOO type, HEU type, IFR type, IHW type, IMF type, ISV type, ITE type, ITH type, ITW type, IWR type, IWV type, IWW type, JBW type, KFI type, LAU type, LEV type, LIO type, -LIT type, LOS type, LOV type, LTA type, LTL type, LTN type, MAR type, MAZ type, MEI type, MEL type, MEP type, MER type, MFI type, MFS type, MON type, MOR type, MOZ type, MSE type, MSO type, MTF type, MTN type, MTT type, MTW type, MWW type, NAB type, NAT type, NES type, NON type, NPO type, NSI type, OBW type, OFF type, OSI type, OSO type, OWE type, -PAR type, PAU type, PHI type, PON type, RHO type, -RON type, RRO type, RSN type, RTE type, RTH type, RUT type, RWR type, RWY type, SAO type, SAS type, SAT type, SAV type, SBE type, SBN type, SBS type, SBT type, SFE type, SFF type, SFG type, SFH type, SFN type, SFO type, SGT type, SIV type, SOD type, SOS type, SSF type, SSY type, STF type, STI type, *STO type, STT type, SZR type, TER type, THO type, TOL type, TON type, TSC type, TUN type, UEI type, UFI type, UOZ type. USI type, UTL type, VET type, VFI type, VNI type, VSV type, WEI type, -WEN type, YUG type and ZON type. The term "zeolite" also includes "zeolite-related materials" or "zeotypes" which are prepared by replacing Si4+ or Al3+ with other elements as in the case of aluminophosphates (e.g., MeAPO, AlPO, SAPO, ElAPO, MeAPSO, and ElAPSO), gallophosphates, zincophophates, titanosilicates, etc. and the zeolites as described in this application.

The term "molecular sieves" as used herein refers to a solid with pores of the size of molecules. It includes, but is not limited to microporous and mesoporous materials. In the nomenclature of the molecular sieves the pore size of < 20 Amstrong (Å) is considered microporous and 20 - 500 Å is considered mesoporous.

The term "microporous carrier" as used herein refers to a solid with pores the size of molecules. It includes but is not limited to microporous materials, ALPOs and (synthetic) zeolites, pillared or non-pillared clays, carbon molecular sieves, microporous titanosilicates such as ETS-10, microporous oxides. Microporous carriers can have multimodal pore size distribution, also referred to as ordered ultramicropores (typically less than 0.7 nm) and supermicropores (typically in the range of about 0.7-2 nm). A particular type of microporous carriers envisaged within the present invention, are the molecular sieve zeolites. Zeolites are the aluminosilicate members of the family of microporous carriers. The microporous carrier can be of an ordered crystalline structure or an amorphous material.

The pore size of molecular sieves can further be influenced by the nature of the templating molecules in the synthesis. The addition of swelling agents to the synthesis mixture can further affect the pore size of the resulting molecular sieve. Zeolites with different pore size have been well characterized and described by Martin David Foster in "Computational Studies of the Topologies and Properties of Zeolites", The Royal Institution of Great Britain, Department of Chemistry, University College London, a thesis submitted for the degree of Doctor of Philosophy, London, January 2003.

A comprehensive list of the abbreviations utilized by organic chemists of ordinary skill in the art appears in the first issue of each volume of the Journal of Organic Chemistry; this list is typically presented in a table entitled Standard List of Abbreviations.

For purposes of this invention, the chemical elements are identified in accordance with the Periodic Table of the Elements, CAS version, Handbook of Chemistry and Physics, 67th Ed., 1986-87, inside cover. [Contemplated equivalents of the zeolitic structures, subunits and other compositions described above include such materials which otherwise correspond thereto, and which have the same general properties thereof (e.g., biocompatible), wherein one or more simple [variations of substituents are made which do not adversely affect the efficacy of such molecule to achieve its intended purpose. In general, the compounds of the present invention may be prepared by the methods illustrated in the general reaction schemes as, for [example, described below, or by modifications thereof, using readily available starting materials, reagents and conventional synthesis procedures. In these reactions, it is also possible to make use of variants which are in themselves known, but are not mentioned here.
a.. "the molecular sieve matrix is selected from among microporous materials, selected from among zeolites. porous oxides, silicoaluminophosphates and aluminosilicates"
b.. "zeolite selected from among the family of small pore sized zeolites such as zeolite A and ZKF, and combinations thereof"
c.. "large pore zeolites such as ZSM-5, MCM-22, ferrierite, faujastites X and Y and microporous molecular sieves"
d.. "The matrix can also be a molecular sieve selected from among molecular sieves MCM-41. MCM-48, HSM. SBA-15, and combinations thereof"
e.. "Methods are available in the art for preparation of microporous zeolites."
f.. "As used herein, microporous zeolites preferably have a pore size of about 3 angstroms to about 14 angstroms"

The term microporous materials also include amorphous microporous solids. Alternative amorphous microporous solids can be used for present invent. For instance amorphous microporous mixed oxides having, in dried form, a narrow pore size distribution (half width <±10% of the pore diameter) of micropores with diameters in the range of <3 nm and the preparation of said amorphous microporous mixed oxides have been well described in US6121187 and others have been well documented in WO0144308, US6753287, US6855304, US6977237 , WO2005097679, US7055756 and US7132093.

The above described data-storage capable porous structures (such as the molecular sieves or the ordered comprising oligo atomic silver clusters of present invention) can be incorporated in membranes or films. Paints or fluids comprising the data-storage capable porous structures of present invention can be used for coating surfaces with the data-storage capable porous structures.

Media (e.g. paints, gelling liquids, elastomers) are available and methods of manufacturing to achieve such membranes or films, for instance a filled elastomeric polymer, which comprise the oligo-atomic metal clusters confined in molecular sieves or in ordered porous oxides (microporous or mesoporous or mixed mesoporous/microporous) or porous materials with nanometer dimension (0.3-10 nm) windows, channels and cavity architectures. Typical but not exclusive examples of such elastomeric polymers are polydimethylsiloxane (silicone rubber), polyisobutene (butyl rubber), polybutadiene, polychloroprene, polyisoprene, styrene-butadiene rubber, acrylonitrile-butadiene rubber (NBR), ethene-propene-diene-rubber (EPDM) and acrylonitrile-butadiene-styrene(AB S) (Murder. 1991). Such films or membranes of the molecular sieves comprising oligo atomic silver clusters; ordered mesoporous and/or microporous oxides comprising oligo atomic silver clusters or porous materials with nanometer dimension (0.3-10 nm) windows, channels and cavity architectures comprising oligo atomic silver clusters can be coated on a substrate.

Following the ASTM (American Society for Testing and Materials) standards, 'elastomers' are defined as "macromolecular materials that return to approximately the initial dimensions and shape after substantial deformation by a weak stress and release of the stress". Elastomers are sometimes also referred to as 'rubbery materials'. A 'rubber' is defined as "a material that is capable of recovering from large deformations quickly and forcibly, and can be, or already is, modified to a state in which it is essentially insoluble (but can swell) in boiling solvent, such as benzene, toluene, methyl ethyl ketone, and ethanol/toluene azeotrope".

In the preparation of data storage membranes, the data-storage capable porous structures are first dispersed in an appropriate solvent. An appropriate solvent is a solvent of low ionic strength, for instance an ionic strength of a value in the range of 1 mmol/L to 0.05 mol/L, and should be able to dissolve the elastomer as well, or at least, should be partially miscible with the solvent in which the membrane forming polymer is dissolved. To improve the dispersion, ultrasonic wave treatment, high speed mixing, modification reactions, can be applied.

The content of data-storage capable porous structures and polymer, in the dispersion, may range from 1 wt% to 80 wt%, preferably 20 wt% to 60 wt%. The dispersion is stirred for a certain time to allow (polymer/filler) interactions to establish, to improve dispersion and possibly to let a chemical reaction take place. When appropriate, the dispersion can be heated or sonicated.

The data carrying porous structures, in particular the confined metal clusters in microporous materials are in molecular sieves, may be incorporated in paints or printing inks (e.g. printable matrix printing ink or printable paints, varnishes (e.g. overprinting varnishes) and paints for depositing, spraying, printing or painting such as a layer or coating on a substrate such as foil, paper and board and aluminium-vaporised paper. Printing inks or paints of the art which are suitable for comprising the emitting materials or data carrying porous structures of present invention are for instance hard resins, colophony-modified phenol resins, maleate resins, hydrogenated mineral oil cuts, synthetic aromatic oils, alkyd resins in particular hydrocarbon resins and/or a colophony resin ester and dialkyl ether such as di-n-dodecyl ether, di-n-undecyl ether, allyl-n-octyl ether, n-hexyl-n-undecyl ether as a vehicle. Particular suitable for or the resin(s) water-insoluble fatty acid esters of polyvalent alcohols or ethinols as solvent. Suitable printing inks in the art are described in US4028291, US4169821, US4196033, US4253397, US4262936, US4357164, US5075699, US5286287, US5431721, US5886066, US5891943, US6613813 and US5965633. The data storage media of present invention may be painted, printed or coated on a substrate in an optical information carrying tag, marker or image. The optical data storage compositions with the data carrying porous structures of present invention can be attached or integrated on articles to provide such articles with for instance security image or a bio-label A particular advantage of present invention is that not only the printed or coated images can comprise optical information as such that is invisible under ambient conditions but moreover that additional optical information can be added to or written in the image for instance by defined UV radiation.

Security images generally comprise an image which is invisible or otherwise undetectable under ambient conditions or which comprise optical information which is invisible or otherwise undetectable under ambient conditions, and which can be rendered visible or detectable by application of a suitable stimulus; or alternatively, the image may change from one colour under ambient conditions to another colour upon application of a stimulus. A stimulus suitable for the materials of present invention is for instance voltage, electromagnetic radiation, UV radiation or radiation with light at a wave length below 400 nm to induce a wave length switch to the lower wave lengths. Articles which include security images are useful in many areas of industry, for example in packaging, identification cards, biolabels and labels. Such articles may comprise a further printed image, in addition to the security image. It is useful to provide packaging which includes a security image invisible to a user under ambient conditions, but which can be rendered visible upon application of a stimulus; for example, if a customs and excise official wishes to check whether imported goods are genuine or counterfeit or simply want a radiation means or radiation element to automatically trace a particular items with the data storage image among other items that are not for seen of the optical information image. If the packaging includes the security image, rendered visible or otherwise detectable by a suitable stimulus, the customs and excise official can determine that the packaging, and hence the goods, are not counterfeit. Likewise, it is advantageous to provide an identification card in which a security image is invisible or a defined colour under ambient conditions, but which can be rendered visible or detectable, or change colour upon application of a stimulus in order to prove the identity of a user of the identity card, in order to determine that the identity card is genuine. For instance in the manufacture of bank notes, it is desirable to include as many security features as possible, which may include multiple security images using a variety of compounds capable of changing colour upon application of a stimulus or stimuli (including movement of the bank note to change viewing angle) , or turning coloured from colourless, or vice versa. The advantage of present invention is that the microporous materials can be integrated in fibres which can be integrated in the fibre mixing process during production of such security documents or banknotes.

Solvent casting or coating is used as the membrane preparation process.

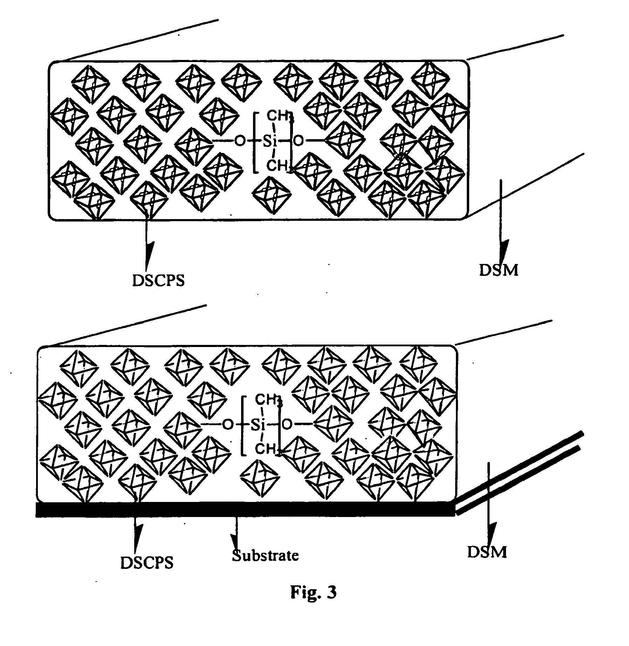

A particular method of coating is solution-depositing of the molecular sieves comprising oligo atomic silver clusters comprises spray-coating, dip-casting, drop-casting, evaporating, blade-casting, or spin-coating the molecular sieves comprising oligo atomic silver clusters; ordered mesoporous and/or microporous oxides comprising oligo atomic silver clusters or porous materials with nanometer dimension (0.3-10 nm) windows, channels and cavity architectures with an assembly of oligo atomic metal clusters confined in such structures (hereinafter the data-storage capable porous structures or DSCPS) onto a substrate (figure 3)

The (polymer/ data-storage capable porous structures or paint/ data-storage capable porous structures) dispersion can be cast on a non-porous support from which it is released afterwards to form a self-supporting film. One way tot realise this is by soaking it previously with a solvent, which has a low affinity for the dispersion. Also, the support can be treated with adhesion promoters.

The (polymer/ data-storage capable porous structures or paint/ data-storage capable porous structures) dispersion can be cast or printed on a fibrous structure such as a textile, paper or board.

After casting, printing or coating, the solvent is evaporated and, if necessary, a heat treatment can be applied to finish the cross-linking reactions. The heat treatment can possibly occur under vacuum conditions to remove the remaining solvent. The resulting supported membranes be a filled elastomer with the thickness of this selective layer in a range from 0.01 µm to 500 µm, preferably from 0. 1 to 250 µm and yet more preferably from 10 to 150 µm.

The most important elastomers are polyisoprene (natural or synthetic rubber (IR)), polychloroprene (chloroprene rubber (CR)), butyl rubber (BR) , styrene-butadiene rubber (SBR), acrylonitrile-butadiene rubber (NBR), ethene-propene-diene-rubber (EPDM), acrylonitrile-butadiene-styrene (ABS), chlorosulfonated polyethylene (CSM), I polyacrylate (polyacrylic rubber), polyurethane elastomers, polydimethylsiloxane (PDMS, sometimes more generally referred to as silicone rubber), tluorosilicones and polysulfides.

Polystyrene is a thermoplastic polymer that particularly resistant to irradiation .

The data storage or data imaging of present invention may need particular characteristics according to its environment of use a variety of alternatives polymers that provide design freedom which preparation protocols are available in the art to design complex shapes, to consolidate parts into fewer components, simplify production, to produce transparent and precolored components, to reduce part weight, to reduce noise when the data storage or data imaging means or element is moving, to have a reliable performance at elevated temperature, to have chemical resistance in harsh climates, to have the desired stiffness, strength and toughness , to have hydrolytic stability over time , to have electrical properties to have a desired physical appearance

Polymers that are suitable for incorporation of the data-storage capable porous structures of present invention are for instance Spire™ family of ultra polymers such as 1) KetaSpire® polyetheretherketone (PEEK) which is easy-to-mold ultra polymer offering outstanding chemical resistance and mechanical performance up to 300°C (570°F) or AvaSpire® modified PEEK, a PEEK-based formulations or 2) PrimoSpire® self-reinforced polyphenylene (SRP) known to be designable in a very stiff, strong unreinforced polymer with a remarkable combination of surface hardness, chemical resistance and inherent flame-retardant properties or 3) EpiSpire™, an high-temperature sulfone (HTS) known te be a transparent amorphous polymer with excellent creep resistance at temperatures up to 265°C (510°F) or 4) Torlon® polyamide-imide (PAI) with higher strength and stiffness that most thermoplastic up to 275°C (525°F) combined with superior resistance to chemicals, creep and wear. Other polymers that are suitable for incorporation of the data-storage capable porous structures of present invention are the family of amorphous sulfone polymers such as 1) Udel® PSU known to be designable into tough, transparent plastic with exceptional chemical resistance, good hydrolytic stability and an HDT of 345°F (174°C) or the 2) Mindel® modified polysulfone with superior electrical propertiesor 3) the Ravel® R (PPSU) known to deliver a super-tough transparent plastic with an HDT of 405°F (207°C), excellent chemical resistance and the unique ability to be steam sterilized without significant loss of properties or 4) the Radel® A (PES) know to deliver a transparent plastic with a high HDT of 400°F

(204°C) and good chemical resistance or the Acudel® modified PPSU. Other polymers that are suitable for incorporation of the data-storage capable porous structures of present invention are for instance the semi-crystalline aromatic polyamides such as for instance the Amodel® polyphthalamide (PPA) known to deliver a high-temperature nylon with exceptional mechanical properties, an HDT of 535°F (280°C), excellent chemical resistance and low moisture uptake or the Ixef® polyarylamide (PA MXD6) known to deliver aesthetic, structural specialty nylon that combines outstanding stiffness with exceptional surface appearance, plus low and slow water uptake, and great flow properties. Other polymers that are suitable for incorporation of the data-storage capable porous structures of present invention are for instance semi-crystalline polymers such as the Primef® polyphenylene sulfide (PPS) which delivers a high-flow, structural plastic with good temperature and chemical resistance as well as inherent flame retardant properties or the Xydar® liquid crystal polymer (LCP) known to deliver high-flow, high-temperature plastic with an HDT of 570°F (300°C), and extremely high chemical resistance. These are available with design and processing guides form Solvay Advanced Polymers.

A particular example of manufacturing a data storage carried based on the data-storage capable porous structures of present invention and a polymer is for instance the use of polydimethylsiloxane (PDMS), RTV-615 A and B (density 1.02 g/ml) and the adhesion promoter (SS 4155) which are obtainable from General Electric Corp. (USA). Component A is a prepolymer with vinyl groups. Component B has hydride groups and acts as cross-linker and EPDM (Keltan 578 from DSM) and data-storage capable porous structures of present invention which are well dried before use.

Such can be produced by preparing dispersing a powder of the data-storage capable porous structures of present invention (for instance a zeolite comprising oligo atomic silver clusters) in hexane; adding the cross-linker (RTV 615 B) to the dispersion of data-storage capable porous structures of present invention and stirring this this mixture at 40°C for two hours to allow sufficient time to establish strong interactions between both phases. Adding the prepolymer (RTV 615 A) and stirring the mixture for another hour at 60°C to induce prepolymerisation; Pouring the (PDMS/ZSM-5 CBV 3002) in a petridish and allowing the solvent to evaporate for several hours and the resulting film was cured at 100°C. The content of the solid components (i.e. PDMS and tiller) in the casting solution was 18.5 wt%. The RTV 615 A/B ratio for optimal polymer curing was 7 in order compensate for the loss of hydride groups due to their reaction with the surface silanol goups on the zeolite (normally it is in a 10/1 ratio, as proposed by the manufacturer to be the ratio for optimal curing).

### EXAMPLES

### Example 1 Preparation and methods

Various methods for the production of metal ion exchanged molecular sieves are available in the art. A method similar as described by Jacobs et al. (Jacobs, P. A. & Uytterhoeven, J. B., 1979, Journal of the Chemical Society-Faraday Transactions I 75, 56-64) was used for incorporating silver ions in molecular sieves and creating silver clusters. However lots of parameters like loading percentage of the zeolites, exchange time, length of temperature treatment, initial, gradient and final temperature of the temperature treatment, presence of gasses during the temperature treatment (e.g. in vacuum, in presence of oxygen, in presence of oxygen and nitrogen, in presence of hydrogen, in presence of CO and/or CO₂ gas) and the presence of moisture in the air influences the finally formed types of clusters, oxidation state of the clusters and distribution and polydispersity of the types of clusters formed.

A typical procedure goes as follows: Zeolite 3A (Union Carbide; 500 mg) was suspended in 100 mL MQ-water containing 13 ± 1 weight percent of silver nitrate (8 ± 1 % Ag). After stirring in the dark for 2 hours the ion exchange (± 17 % of the zeolite's cation exchange capacity) was stopped. The material was poured on a Büchner filter and extensively washed with MQ-water. This washing stepped proved a quantitative silver exchange since no precipitation with chlorides was observed in the washing water. The recovered white powder on top of the filter was heated gently untill 450°C for 1 day with 5 minute stops at 50°C, 70°C, 90°C and 110°C to avoid damaging of the zeolite structure. After this heat treatment a white to sometimes slightly yellowish powder was obtained. The powder was stored in the dark under dry atmosphere.

### Example 2 Emission

It was demonstrated that metal ion cluster especially silver in confined molecular sieves have a distinct and tunable emission throughout the VIS and NIR part of the electromagnetic spectrum while they are all excitable in the UV region. Thanks to the host matrix the confined metal clusters are prevented from aggregation with each other to form bigger non emissive nanoparticles. Also they can be shielded from the outside environment (e.g. oxygen) if required by adding a silicon coating around the molecular sieves.

### Example 3 Photoactivation of individual spots within an individual silver-exchanged zeolite crystal: writing patterns inside the zeolite crystals.

By irradiation with picoseconds pulsed 375 nm laser light of selected spots inside a silver-exchanged zeolite crystal, synthesized as described in example 1, using a confocal microscope setup, highly emissive silver clusters are formed inside a diffraction limited area, induced by the applied excitation source, giving rise to a strongly enhanced fluorescence (up till 200 times) from these selected spots. Typical irradiation powers for activation are 10 till 10 000 W/cm² for photoactivation, whereas irradiation times vary from a 10 seconds for 10 000 W/cm² till 1200 seconds for irradiation at 10 W/cm².

By scanning the sample using a lower power (0.1 till 10 W/cm²), the photoactivated areas are easily recognized by their bright emission without further photoactivation during the scanning process.

### Example 5 Tunable color of excitation and emission of the visible emission source.

The molecular sieves containing the oligo atomic clusters can be excited by UV light resulting in emission in the visible range as described in example 3. However by changing or tuning the excitation wavelength or by using multiple excitation wavelengths coming from one or multiple sources and by tuning the different ratios of excitation power between the different wavelengths, it is possible to tune the color of the visible emission. In this way one could have one emissive device which output color can be tuned by the end user. This effect can be achieved by using different oligo atomic clusters in the molecular sieves that have a different emissive responds on different UV wavelengths. An example of this was synthesized where irradiation of the materials with 360 nm light resulted in blue emission while exciting at 254 nm resulted in yellow emission. If one excites with the two wavelengths, 254 nm and 360 nm at same time and by changing the ratios of excitation power, one creates a whole range of emission colors between blue and yellow and all the possible sum colors.

### Example 6 Bright emissive markers

Since the oligo atomic clusters containing molecular sieves are a bright emissive material, consisting of generally micrometer or submicrometer sized crystals, one can use these small crystals as bright emissive markers. Especially when they are smaller than 100 nm they can be used as alternatives for fluorescent beads or quantum dots.

### Example 7 Read / Write

1. How to write in the material:
   A high-intensity 375 nm ps pulsed laser beam is focused through a confocal microscope on the material (the setup is explained in more detail below). Lower laser intensity can be compensated by a much longer irradiation time. For instance at 0.01 kW/cm2, an irradiation time of 1200 seconds is necessary, whereas 10 seconds is sufficient when using 10 kW/cm2.
2. How to read data from the material:
   The same microscope with the same laser source is used to map the emission of the crystal.. However, much lower excitation power is applied. Typically, the sample is scanned using an excitation power of 0.1 till 10 W/cm2. Read out times of 0.1-10 ms are only necessary.

### Example 8: excitation by an electrical field and emission of the visible emission source

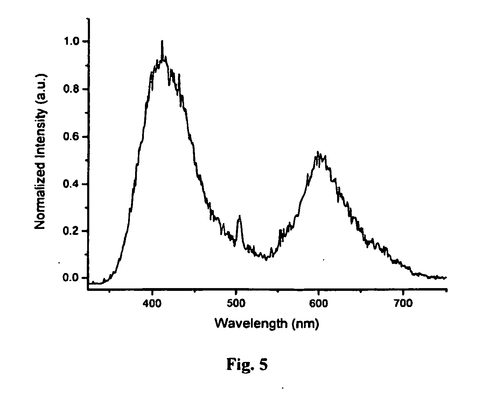

A 3A zeolite was exchanged with silver (10% weight) and then thermally treated (24 hours at 450°C) resulting in a partial reduction and formation of small silver clusters in the host matrix. 0,4mg of these silver loaded zeolites were added to 1 ml of a 20mg/ml PVK (poly-N-vinylcarbazole) in chlorobenzene solution. From this solution a film was spincoated on a ITO covered glass substrate. Ytterbium was then evaporated through a patterning mask on the spincoated film as a second electrode. After applying an electric field over this device, in which ITO functioned as anode and ytterbium as cathode, red electroluminescence was observed. The emission spectrum of this electroluminescence is shown in figure 5. The synthesis of the oligo metal clusters with the desired emissive properties can be tuned by changing the synthesis parameters.

### BRIEF DESCRIPTION OF THE DRAWINGS

The present invention will become more fully understood from the detailed description given herein below and the accompanying drawings which are given by way of illustration only, and thus are not limitative of the present invention, and wherein:

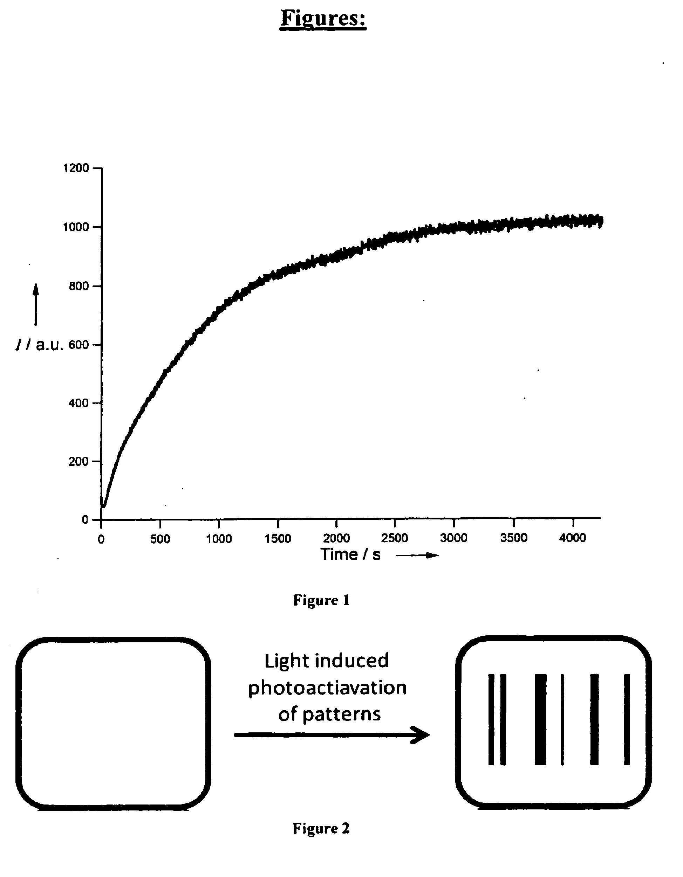

Figure 1: Graph of the emission intensity originating from an individual silver-exchanged zeolite crystal versus time upon excitation with 375 nm picoseconds pulsed light with average power of 48 W/cm² in confocal mode. This same excitation sources causes the photoactivation of the emission.
Figure 2: Scheme of the photoactivation of specific patterns in an individual silver-exchanged zeolite crystal in order to generate bar codes.
Figure 3 displays a Data Storage Medium (DSM) with the data-storage capable porous structures or DSCPS which are an assembly of oligo atomic metal clusters confined in ordered porous oxides, preferably microporous silica oxides embedded in a matrix, preferably a polymer, copolymer or elastomer matrix. Which preferably is transparent or semitransparent.

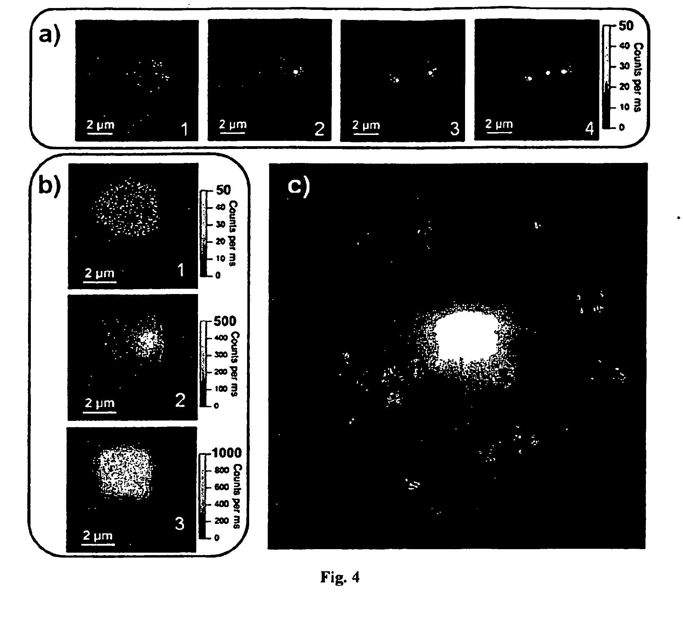

Figure 4 demonstrates a) False color emission image of a single silver-exchanged zeolite A crystal before photoactivation (1) and after consecutive activation of three individual spots (2, 3 and 4) in one crystal by irradiation with a ps 375 nm laser at 10 W/cm² during 20 minutes for each spot through a confocal microscope. b) Total activation of a single crystal. (1) shows the crystal before activation. After 5 min of irradiation by a 16.7 kW/cm² pulsed 375 nm beam the intensity increased by a factor 10 (2). Another 20 minutes of activation at the same power yielded a total intensity increase of a factor 20. Note the increased scaling range from (1) till (3). The images in a) and b) were taken by a confocal microscope under irradiation by a 375 nm pulsed excitation source of respectively 10 and 20 W/cm², with 2 ms integration time per pixel. c) True color image taken with a digital camera (Canon PuwerShot A710 IS with a 400 nm longpass filter in front of the lens to filter out the excitation light) through the eye piece of the microscope showing the green emission from the same zeolite after complete activation at 16.7 kW/cm² excitation power.

## Claims

1. A data-storage medium for storing optical data, **characterized in that** the optical data-storage medium comprises as data storage material oligo-atomic noble metal clusters confined in molecular sieves which are embedded in a solid or flexible support, wherein said oligo-atomic noble metal clusters are not in charge association with charge compensating anions selected from the group consisting of oxalate, hydroxide, azide, carbonate, bicarbonate, sulfate, sufite, chlorate, perchlorate, acetate and formate, wherein said noble metal is selected from the group consisting of gold, silver, platinum, palladium, silicium and rhodium, and wherein the metal clusters if subjected at room temperature or above to invisible radiation or an electrical field in response emit visible light.

2. The data storage medium according to claim 1, in which the emission by the oligo-atomic noble metal clusters confined in molecular sieves upon UV or visible light excitation is irreversibly enhanced by an initial illumination with UV or visible light.

3. The data storage medium according to any of the previous claims, in which the molecular sieve units subjected to primary write radiation or illumination by UV or visible light carry an enhanced excitation effect upon a next read lower irradiation or illumination by an UV or visible light radiation.

4. The data storage medium according to any of the previous claims, of which the molecular sieve units when subjected to sufficiently intense or long read illumination by radiation from a laser beam, a medium wave UV (UVC) ray radiation source, a Far UV (FUV), a vacuum UV (VUV) ray radiation source, an Extreme UV (EUV) or a deep UV (XUV) ray radiation source, carry an enhanced excitation effect upon a next illumination by an UV or visible light illumination which is sufficiently intense and long to activate the emission.

5. The data storage medium according to any of the previous claims, wherein the oligo-atomic noble metal clusters confined in molecular sieves are spread over a matrix, wherein the oligo-atomic noble metal clusters confined in molecular sieves are preferably three dimensionally spread over the matrix.

6. The data storage medium according to any of the previous claims, wherein the oligo-atomic noble metal clusters confined in molecular sieves form a mono particles layer of molecular sieve.

7. The data storage medium according to any of claims 1 to 5, wherein the oligo-atomic noble metal clusters confined in molecular sieves are structured in multi particles layers of molecular sieve particles.

8. The data storage medium according to claim 6 or 7, wherein the layer or layers of oligo-atomic noble metal clusters confined in molecular sieves are covered by a film.

9. The data storage medium according to any of the previous claims, wherein a laser beam for instance a pulsed laser beam can record or write a pattern that can be visualised or read by radiation by UV or visible light.

10. The data storage medium according to any of the previous claims wherein said oligo-atomic noble metal clusters are Au and/or Ag clusters.

11. The data storage medium according to claim 5, wherein the matrix further comprises a matrix or a binder to fix the dispersed oligo-atomic noble metal clusters confined in molecular sieves.

12. The data storage medium according to any of the previous claims, wherein the assembly is a powder assembly of small Au and/or Ag clusters confined in molecular sieves.

13. The data storage medium according to any of the previous claims, wherein the invisible radiation stems from an excitation source which is a laser or a light emitting diode radiation source.

14. The data storage medium according to any of the previous claims consisting of an assembly of different small Au and/or Ag clusters confined in one or a combination of multiple molecular sieves to create light at a predetermined color temperature.

15. The data storage medium according to any of the previous claims, wherein the molecular sieves are a microporous material with microporous material selected from the group consisting of zeolites, porous oxides, silicoaluminophosphates and aluminosilicates being preferred.

16. The data storage medium of claim 15, wherein the molecular sieves are zeolites selected from the small pore zeolites among zeolite A-like materials such as zeolite 3A, Zeolite 13X, Zeolite 4A and Zeolite 5A, and ZKF or combinations thereof.

17. The data storage medium according to claim 15, wherein the molecular sieves are large pore zeolites from the group consisting of Mordenite, ZSM-5, MCM-22, Ferrierite, Faujasites X and Y.

18. The data storage medium according to any of the previous claims, wherein the molecular sieves are selected from among molecular sieves MCM-41, MCM-48, HSM, SBA-15, and combinations thereof.

19. The data storage medium according to any of claims 10 to 18, wherein the porcs of the molecular sieves containing the clusters of Au and/or Ag are coated by a coating matrix or are closed by stopper molecules.

20. The data storage medium according to any of the previous claims, which is also an optical data imaging or optical data display system.

21. The data storage medium according to any of the previous claims, whereby the oligo-atomic noble metal clusters confined in molecular sieves are incorporated in a matrix, which is preferably a polymer, copolymer or graft copolymer matrix.

22. The data storage material according to any of the previous claims, whereby the oligo-atomic noble metal clusters confined in molecular sieves are incorporated in a fiber.

23. The data storage medium according to any of the previous claims, whereby the matrix or the fiber is coated by a protective film.

24. A paint, gelling liquid or elastomer comprising molecular sieves with oligo atomic silver clusters confined therein, wherein said oligo-atomic silver clusters are not in charge association with charge compensating anions selected from the group consisting of oxalate, hydroxide, azide, carbonate, bicarbonate, sulfate, sufite, chlorate, perchlorate, acetate and formate, for forming optical data storage membranes or optical data storage films or for coating surfaces with a data-storage capable layer and wherein the silver clusters if subjected at room temperature or above to invisible radiation or an electrical field in response emit visible light.

25. A printing liquid or ink comprising molecular sieves with oligo atomic silver clusters confined therein wherein said oligo-atomic silver clusters are not in charge association with charge compensating anions selected from the group consisting of oxalate, hydroxide, azide, carbonate, bicarbonate, sulfate, sufite, chlorate, perchlorate, acetate and formate, for depositing, spraying or printing or painting an optical data storage layer or coating on a substrate and wherein the silver clusters if subjected at room temperature or above to invisible radiation or an electrical field in response emit visible light.

26. A method of writing optical data in a pattern on the data storage medium according to any of claims 1 to 23, comprising exposing locoregional portions of the material, with at least one assembly of small Au and/or Ag clusters confined in a molecular sieve particle, to radiation at a radiation power sufficient to cause such assembly which absorbs the radiation to emit light photons and of visualizing such stored optical data by reradiating them or by a larger portion of the materials with lower radiation power sufficient to only read the assemblies of small Au and/or Ag clusters confined in a molecular sieve which store the optical data.

27. The method according to claim 26, wherein the locoregional radiation is from a medium wave UV (UVC) ray, a Far UV (FUV), a vacuum UV (VUV), an Extreme UV (EUV) or a deep UV (XUV) ray radiation source.

## Patentansprüche

1. Datenspeichermedium zum Speichern optischer Daten, **dadurch gekennzeichnet, dass** das optische Datenspeichermedium als Datenspeichermaterial oligoetomare Edelmetallcluster umfasst, die in Molekularsieben eingeschlossen sind, die in einem festen oder flexiblen Träger eingebettet sind, wobei die oligoatomaren Edelmetallcluster in keiner Ladungsassoziation mit ladungskompensierenden Anionen stehen, die ausgewählt sind aus der Gruppe bestehend aus Oxalat, Hydroxid, Azid, Carbonat, Bicarbonat, Sulfat, Sulfit, Chlorat, Perchlorat, Acetat und Format, wobei das Edelmetall ausgewählt ist aus der Gruppe bestehend aus Gold, Silber, Platin, Palladium, Silizium und Rhodium, und wobei die Metallcluster, wenn sie bei Raum- oder höherer Temperatur unsichtbarer Strahlung oder einem elektrischen Feld ausgesetzt sind, als Reaktion sichtbares Licht ausstrahlen.

2. Datenspeichermedium nach Anspruch 1, wobei die Emission durch die oligoatomaren Edelmetallcluster, die in Molekularsieben eingeschlossen sind, bei Anlegung mit UV- oder sichtbarem Licht, irreversibel durch eine anfängliche Beleuchtung mit UV oder sichtbarem Licht verstärkt wird.

3. Datenspeichermedium nach einem der vorangehenden Ansprüche, wobei die Molekularsiebeinheiten, die einer primären Schreibstrahlung oder -beleuchtung durch UV- oder sichtbares Licht ausgesetzt sind, eine verstärkte Anregunguwirkung bei einer nächsten geringeren Lesestrahlung oder -beleuchtung durch eine Strahlung von UV- oder sichtbarem Licht zeigen.

4. Datenspeichermedlum nach einem der vorangehenden Ansprüche, dessen Molekularsiebeinheiten, wenn sie einer ausreichend intensiven oder lange Lesebeleuchtung durch Strahlung von einem Laserstrahl, eine Strahlungsquelle eines Mittelwellen-UV- (UVC-) Strahls, eine Strahlungsquelle eines Fern-UV- (FUV-), eine Vakuum-UV- (VUV-) Strahls, eine Strahlungsquelle eines Extrem-UV- (EUV-) oder tiefen UV- (XUV-) Strahls ausgesetzt sind, eine verstärkte Anregungswirkung bei einer nächsten Beleuchtung durch eine Beleuchtung mit UV- oder sichtbarem Licht zeigen, die ausreichend intensiv und lange ist, um die Emission zu aktivieren.

5. Datenspeichermedium nach einem der vorangehenden Ansprüche, wobei die oligoatomaren Edelmetallcluster, die in Molekularsieben eingeschlossen sind, über eine Matrix verteilt sind, wobei die oligoatomaren Edelmetallcluster, die in Molekularsieben eingeschlossen sind, vorzugsweise dreidimensional über die Matrix verteilt sind.

6. Datenspeichermedium nach einem der vorangehenden Ansprüche, wobei die oligoatomaren Edelmetallcluster, die in Molekularsieben eingeschlossen sind, eine Monopartikelschicht eines Molekularsiebs bilden.

7. Datenspeichermedium nach einem der Ansprüche 1 bis 5, wobei die oligoatomaren Edelmetallcluster, die in Molekularsieben eingeschlossen sind, in Mehrfachpartikelschichten von Molekularsiebpartikeln strukturiert sind.

8. Datenspeichermedium nach Anspruch 6 oder 7, wobei die Schicht oder Schichten von oligoatomaren Edelmetallclustern, die in Molekularsieben eingeschlossen sind, von einem Film überzogen sind.

9. Datenspeichermedium nach einem der vorangehenden Ansprüche, wobei ein Laserstrahl, zum Beispiel ein gepulster Laserstrahl, ein Muster aufzeichnen oder schreiben kann, das durch Strahlung von UV- oder sichtbarem Licht visualisiert oder gelesen werden kann.

10. Datenspeichermedium nach einem der vorangehenden Ansprüche, wobei die oligoatomaren Edelmetallcluster Au- und/oder Ag-Cluster sind.

11. Datenspeichermedium nach Anspruch 5, wobei die Matrix des Weiteren eine Matrix oder ein Bindemittel zum Fixieren der oligoatomaren Edelmetallcluster, die in Molekularsieben eingeschlossen sind, umfasst.

12. Datenspeichermedium nach einem der vorangehenden Ansprüche, wobei die Anordnung eines Pulveranordnung kleiner Au- und/oder Ag-Cluster ist, die in Molekularsieben eingeschlossen sind.

13. Datenspeichermedium nach einem der vorangehenden Ansprüche, wobei die unsichtbare Strahlung von einer Anregungsquelle stammt, die eine Laser- oder eine Leuchtdioden-Strahlungsquelle ist.

14. Datenspeichermedium nach einem der vorangehenden Ansprüche, bestehend aus einer Anordnung verschiedener kleiner Au- und/oder Ag-Cluster, die in einem Molekularsieb oder in einer Kombination aus mehreren Molekularsieben eingeschlossen sind, um Licht bei einer vorbestimmten Farbtemperatur zu erzeugen.

15. Datenspeichermedium nach einem der vorangehenden Ansprüche, wobei die Molekularsiebe ein mikroporöses Material sind, wobei das mikroporöse Material ausgewählt ist aus der Gruppe bestehend aus Zeolithen, porösen Oxiden, Silicoaluminophosphaten und Aluminosilicate, die bevorzugt sind.

16. Datenspeichermedium nach Anspruch 15, wobei die Molekularsiebe Zeolithe sind, die ausgewählt sind aus den kleinporigen Zeolithen unter Zeolith A-artigen Materialien, wie Zeolith 3A, Zeolith 13X, Zeolith 4A und Zeolith 5A und ZKF oder Kombinationen davon.

17. Datenspeichermedium nach Anspruch 15, wobei die Molekularsiebe großporige Zeolithe aus der Gruppe bestehend aus Mordenit, ZSM-5, MCM-22, Ferrierit, Faujasiten X und V sind.

18. Datenspeichermedium nach einem der vorangehenden Ansprüche, wobei die Molekularsiebe ausgewählt sind aus Molekularsieben MCM-41, MCM-48, HSM, SBA-15 und Kombinationen davon.

19. Datenspeichermedium nach einem der Ansprüche 10 bis 18, wobei die Poren der Molekularsiebe, die die Cluster aus Au und/oder Ag enthalten, von einer Beschichtungsmatrix überzogen oder durch Stopper-Moleküle geschlossen sind.

20. Datenspeichermedium nach einem der vorangehenden Ansprüche, das auch ein optisches Datenbildgebungs- oder optisches Datenanzeigesystem ist.

21. Datenspeichermedium nach einem der vorangehenden Ansprüche, wobei die oligoatomaren Edelmetallcluster, die in Molekularsieben eingeschlossen sind, in einer Matrix eingegliedert sind, die vorzugsweise eine Polymer-, Copolymer- oder Pfropfcopolymermatrix ist.

22. Datenspeichermedium nach einem der vorangehenden Ansprüche, wobei die oligoatomaren Edelmetallcluster, die in Molekularsieben eingeschlossen sind, in einer Faser eingegliedert sind.

23. Datenspeichermedium nach einem der vorangehenden Ansprüche, wobei die Matrix oder die Faser von einem Schutzfilm überzogen ist.

24. Lack, Gelierungsflüssigkeit oder Elastomer, umfassend Molekularsiebe mit darin eingeschlossenen oligoatomaren Silberclustern, wobei die oligoatomaren Silbercluster in keiner Ladungsassoziation mit ladungskompensierenden Anionen stehen, die ausgewählt sind aus der Gruppe bestehend aus Oxalat, Hydroxid, Azid, Carbonat, Bicarbonat, Sulfat, Sulfit, Chlorat, Perchlorat, Acetat und Format, zur Bildung optischer Daterispeichermembrane oder optischer Datenspeicherfilme oder zum Beschichten von Oberflächen mit einer datenspeicherungsfähigen Schicht, und
wobei die Silber-Cluster, wenn sie bei Raum- oder höherer Temperatur unsichtbarer Strahlung oder einem elektrischen Feld ausgesetzt werden, als Reaktion sichtbares Licht ausstrahlen.

25. Druckflüssigkeit oder Tinte, umfassend Molekularsiebe mit darin eingeschlossenen oligoatomaren Silberclustern, wobei die oligoatomaren Silbercluster in keiner Ladungsassoziation mit ladungskompensierenden Anionen stehen, die ausgewählt sind aus der Gruppe bestehend aus Oxalat, Hydroxid, Azid, Carbonat, Bicarbonat, Sulfat, Sulfit, Chlorat, Perchlorat, Acetat und Format, zum Sprühen oder Drucken oder Lackieren einer optischen Datenspeicherschicht oder Beschichtung auf einem Substrat, und
wobei die Silber-Cluster, wenn sie bei Raum- oder höherer Temperatur unsichtbarer Strahlung oder einem elektrischen Feld ausgesetzt werden, als Reaktion sichtbares Licht ausstrahlen.

26. Verfahren zum Schreiben optischer Daten in einem Muster auf dem Datenspeichermedium nach einem der Ansprüche 1 bis 23, umfassend das Aussetzen lokoregionaler Abschnitte des Materials, mit mindestens einer Anordnung aus kleinen Au- und/oder Ag-Clustern, die in einem Molekularsiebpartikel eingeschlossen sind, einer Strahlung bei einer Strahlungsleistung, die ausreichend ist, eine solche Anordnung, die die Strahlung absorbiert, zur Emission von Lichtphotonen zu veranlassen, und zum Visualisieren solcher gespeicherter optischer Daten, indem diese oder ein größerer Abschnitt der Materialien mit geringerer Strahlungsleistung bestrahlt wird, die ausreichend ist, um nur die Anordnungen kleiner Au- und/oder Ag-Cluster, die in einem Molekularsieb eingeschlossen sind, zu lesen, die die optischen Daten speichern.

27. Verfahren nach Anspruch 26, wobei die lokoregicnale Strahlung von einer Strahlungsquelle eines Mittelwellen-UV- (UVC-) Strahls, eines Fern-UV-(FUV-), eines Vakuum-UV- (VUV-), eines Extrem-UV-(EUV-) oder tiefen UV (XUV-) Strahls stammt.

## Revendications

1. Support de stockage de données pour stocker des données optiques, **caractérisé en ce que** le support de stockage de données optiques comprend en tant que matière de stockage de données des groupes de métaux nobles oligo-atomiques confinés dans des tamis moléculaires qui sont incorporés dans un support solide ou souple, dans lequel lesdits groupes de métaux nobles oligo-atomiques ne sont pas en association de charge avec des anions de compensation de charge sélectionnés à partir du groupe constitué par un oxalate, un hydroxyde, un azide, un carbonate, un bicarbonate, un sulfate, un sulfite, un chlorate, un perchlorate, un acétate et un formiate, dans lequel ledit métal noble est sélectionné à partir du groupe constitué par l'or, l'argent, le platine, le palladium, le silicium et le rhodium, et dans lequel les groupes de métaux, s'ils sont soumis à température ambiante ou au-dessus à un rayonnement invisible ou à un champ électrique, émettent en réponse une lumière visible.

2. Support de stockage de données selon la revendication 1, dans lequel l'émission par les groupes de métaux nobles oligo-atomiques confinés dans des tamis moléculaires lors d'une excitation par UV ou lumière visible est améliorée de manière irréversible par une irradiation initiale avec des UV ou une lumière visible.

3. Support de stockage de données selon l'une quelconque des revendications précédentes, dans lequel les unités formant tamis moléculaires soumises à un rayonnement ou une irradiation d'écriture primaire par des UV ou une lumière visible portent un effet d'excitation amélioré lors d'une irradiation ou une illumination inférieure de lecture suivante par un rayonnement UV ou de lumière visible.

4. Support de stockage de données selon l'une quelconque des revendications précédentes, dans lequel les unités formant tamis moléculaires, quand elles sont soumises à une irradiation de lecture suffisamment intense ou longue par un rayonnement en provenance d'un faisceau laser, d'une source de rayonnement UV à onde moyenne (UVC), des UV Lointains (FUV), une source de rayonnement UV sous vide (VUV), une source de rayonnement UV Extrême (EUV) ou UV profond (XUV), portent un effet d'excitation amélioré lors d'une irradiation suivante par une irradiation UV ou de lumière visible qui est suffisamment intense et longue pour activer l'émission.

5. Support de stockage de données selon l'une quelconque des revendications précédentes, dans lequel les groupes de métaux nobles oligo-atomiques confinés dans des tamis moléculaires sont étalés sur une matrice, dans lequel les groupes de métaux nobles oligo-atomiques confinés dans des tamis moléculaires sont de préférence étalés de manière tridimensionnelle sur la matrice.

6. Support de stockage de données selon l'une quelconque des revendications précédentes, dans lequel les groupes de métaux nobles oligo-atomiques confinés dans des tamis moléculaires forment une monocouche de particules de tamis moléculaire.

7. Support de stockage de données selon l'une quelconque des revendications 1 à 5, dans lequel les groupes de métaux nobles oligo-atomiques confinés dans des tamis moléculaires sont structurés dans des multicouches de particules de tamis moléculaire.

8. Support de stockage de données selon la revendication 6 ou 7, dans lequel la couche ou les couches de groupes de métaux nobles oligo-atomiques confinés dans des tamis moléculaires sont couvertes par un film.

9. Support de stockage de données selon l'une quelconque des revendications précédentes, dans lequel un faisceau laser par exemple un faisceau laser pulsé peut enregistrer ou écrire un motif qui peut être visualisé ou lu par rayonnement par UV ou lumière visible.

10. Support de stockage de données selon l'une quelconque des revendications précédentes, dans lequel lesdits groupes de métaux nobles oligo-atomiques sont des groupes Au et/ou Ag.

11. Support de stockage de données selon la revendication 5, dans lequel la matrice comprend en outre une matrice ou un liant pour fixer les groupes de métaux nobles oligo-atomiques dispersés confinés dans des tamis moléculaires.

12. Support de stockage de données selon l'une quelconque des revendications précédentes, dans lequel l'ensemble est un ensemble de poudre de petits groupes Au et/ou Ag confinés dans des tamis moléculaires.

13. Support de stockage de données selon l'une quelconque des revendications précédentes, dans lequel le rayonnement invisible provient d'une source d'excitation qui est une source de rayonnement par laser ou diode électroluminescente.

14. Support de stockage de données selon l'une quelconque des revendications précédentes consistant en un ensemble de petits groupes Au et/ou Ag différents confinés dans un seul ou une combinaison de tamis moléculaires multiples pour créer une lumière à une température de couleur prédéterminée.

15. Support de stockage de données selon l'une quelconque des revendications précédentes, dans lequel les tamis moléculaires sont une matière microporeuse avec matière microporeuse sélectionnée dans le groupe constitué des zéolites, des oxydes poreux, des silicoaluminophosphates et des aluminosilicates qui sont préférés.

16. Support de stockage de données selon la revendication 15, dans lequel les tamis moléculaires sont des zéolites sélectionnées à partir des zéolites à petits pores parmi des matières semblables à la zéolite A comme la zéolite 3A, la Zéolite 13X, la Zéolite 4A et la Zéolite 5A, et ZKF ou des combinaisons de celles-ci.

17. Support de stockage de données selon la revendication 15, dans lequel les tamis moléculaires sont des zéolites à grands pores du groupe constitué par la Mordénite, ZSM-5, MCM-22, la Ferriérite, les Faujasites X et Y.

18. Support de stockage de données selon l'une quelconque des revendications précédentes, dans lequel les tamis moléculaires sont sélectionnés parmi des tamis moléculaires MCM-41, MCM-48, HSM, SBA-15, et des combinaisons de ceux-ci.

19. Support de stockage de données selon l'une quelconque des revendications 10 à 18, dans lequel les pores des tamis moléculaires contenant les groupes d'Au et/ou Ag sont couverts par une matrice de revêtement ou sont fermés par des molécules bouchons.

20. Support de stockage de données selon l'une quelconque des revendications précédentes, qui est également un système d'imagerie de données optique ou d'affichage de données optique.

21. Support de stockage de données selon l'une quelconque des revendications précédentes, par lequel les groupes de métaux nobles oligo-atomiques confinés dans des tamis moléculaires sont incorporés dans une matrice, qui est de préférence une matrice de polymère, de copolymère ou de copolymère greffé.

22. Matière de stockage de données selon l'une quelconque des revendications précédentes, par laquelle les groupes de métaux nobles oligo-atomiques confinés dans des tamis moléculaires sont incorporés dans une fibre.

23. Support de stockage de données selon l'une quelconque des revendications précédentes, par lequel la matrice ou la fibre est revêtue d'un film protecteur.

24. Peinture, liquide gélifiant ou élastomère comprenant des tamis moléculaires avec des groupes d'argent oligo-atomiques confinés en leur sein, dans lesquels lesdits groupes d'argent oligo-atomiques ne sont pas en association de charge avec des anions de compensation de charge sélectionnés à partir du groupe constitué par un oxalate, un hydroxyde, un azide, un carbonate, un bicarbonate, un sulfate, un sulfite, un chlorate, un perchlorate, un acétate et un formiate, pour former des membranes de stockage de données optiques ou des films de stockage de données optiques ou pour revêtir des surfaces avec une couche susceptible de stocker des données, et dans lesquels les groupes d'argent, s'ils sont soumis à température ambiante ou au-dessus à un rayonnement invisible ou à un champ électrique, émettent en réponse une lumière visible.

25. Liquide ou encre d'impression comprenant des tamis moléculaires avec des groupes d'argent oligo-atomiques confinés en leur sein dans lesquels lesdits groupes d'argent oligo-atomiques ne sont pas en association de charge avec des anions de compensation de charge sélectionnés à partir du groupe constitué par un oxalate, un hydroxyde, un azide, un carbonate, un bicarbonate, un sulfate, un sulfite, un chlorate, un perchlorate, un acétate et un formiate, pour le dépôt, la pulvérisation ou l'impression ou la peinture d'une couche ou d'un revêtement de stockage de données optique sur un substrat, et dans lequel les groupes d'argent, s'ils sont soumis à température ambiante ou au-dessus à un rayonnement invisible ou à un champ électrique, émettent en réponse une lumière visible.

26. Procédé d'écriture de données optiques dans un motif sur le support de stockage de données selon l'une quelconque des revendications 1 à 23, comprenant l'exposition de parties locorégionales de la matière, avec au moins un ensemble de petits groupes Au et/ou Ag confinés dans une particule de tamis moléculaire, à un rayonnement à une puissance de rayonnement suffisante pour amener un tel ensemble qui absorbe le rayonnement à émettre des photons de lumière, et de visualisation de telles données optiques stockées en les irradiant de nouveau ou par une partie plus grande des matières avec une puissance de rayonnement inférieure suffisante pour lire seulement les ensembles de petits groupes Au et/ou Ag confinés dans un tamis moléculaire qui stockent les données optiques.

27. Procédé selon la revendication 26, dans lequel le rayonnement locorégional provient d'un rayonnement UV à onde moyenne (UVC), d'une source de rayonnement Un Lointain (FUV), UV sous vide (UV), UV Extrême (EUV) ou UV profond (XUV).
